# EUROPÄISCHE PATENTSCHRIFT

(11) **EP 3 609 991 B1**
(45) Veröffentlichungstag und Bekanntmachung des Hinweises auf die Patenterteilung: **02.03.2022**
(21) Anmeldenummer: 18725106.1
(22) Anmeldetag: 12.04.2018
(51) Int. Cl.: C10M 169/04, C08J 3/22, C08K 3/00, F16C 33/20, B32B 27/18, C10N 10/02, C10N 10/04, C10N 10/06, C10N 10/08, C10N 10/12, C10N 10/16, C10N 30/06, B32B 3/26, B32B 5/16, B32B 15/18, C08K 3/30, C08K 3/32, C10N 50/10, C10N 50/00, B32B 15/16

(54) **GLEITMATERIAL AUF PTFE-POLYMERBASIS MIT DIE TRIBOLOGISCHEN EIGENSCHAFTEN VERBESSERNDEN FÜLLSTOFFEN**
PTFE POLYMER-BASED SLIDING MATERIAL HAVING FILLERS WHICH IMPROVE THE TRIBOLOGICAL PROPERTIES
MATÉRIAU GLISSANT À BASE DE POLYMÈRE PTFE CONTENANT DES CHARGES AMÉLIORANT LES PROPRIÉTÉS TRIBOLOGIQUES

(30) Priorität: 12.04.2017 DE 102017107959
(43) Veröffentlichungstag der Anmeldung: 19.02.2020
(73) Patentinhaber: KS Gleitlager GmbH, 68789 St. Leon-Rot (DE)
(72) Erfinder: WITT, Mario, 69120 Heidelberg (DE); REINICKE, Rolf, 76669 Bad Schoenborn (DE); TAIPALUS, Riitta, 67117 Limburgerhof (DE)
(74) Vertreter: DREISS Patentanwälte PartG mbB
(86) Internationale Anmeldenummer: PCT/EP2018/059437
(87) Internationale Veröffentlichungsnummer: WO 2018/189318

(56) Entgegenhaltungen:
- EP-A1- 1 839 846
- EP-A1- 2 677 021
- WO-A1-02/099298
- WO-A1-2016/170742
- DE-T2- 60 024 579
- JP-A- H11 257 356
- US-A1- 2011 082 059

## Beschreibung

Die Erfindung betrifft ein Gleitmaterial auf PTFE-Polymerbasis mit die tribologischen Eigenschaften verbessernden Füllstoffen.

Im Stand der Technik sind eine Vielzahl von Gleitmaterialien bekannt, die beispielsweise auf PTFE-Basis beruhen und verschiedenste Füllstoff verwenden.

Beispielsweise ist in der DE 10 2011 077 008 A1 ein Gleitlagerverbundwerkstoff auf PTFE-Basis beschrieben, wobei Füllstoffe umfassend Thermoplaste und/oder Duroplaste und weitere tribologisch wirksame Stoffe zusammen in compoundierter Form in der Polymerbasis des Gleitschichtmaterials vorliegen.

Weiterhin beschreibt die EP 2 563 590 B1 einen Gleitlagerwerkstoff auf Fluorpolymerbasis, zum Beispiel auf PTFE-Basis, wobei 5-25 Vol.-% Bornitrid und 1-15 Vol.-% Mischphasenoxidpigmente dem Fluorpolymer zugegeben sind, wodurch die Verschleißfestigkeit verbessert werden soll. Die EP 2 316 707 A1 sowie die EP 1 647 574 A1 beschreibt einen Gleitlagerwerkstoff auf PTFE-Basis mit Bariumsulfat, Phosphat und einer Menge 0,1 bis 2% an Metallsulfid. Schließlich ist aus der WO 2016/170742 A1 ein Werkstoff auf Basis PTFE und 10-40 % Phosphate bekannt.

Die WO 02/099298 A1 beschreibt einen Gleitlagerverbundwerkstoff enthaltend Zinksulfid.

Die DE 600 24 579 T2 beschreibt eine Harzzusammensetzung für ein Gleitelement enthaltend Bariumsulfat und Phosphat.

Trotz der Vielzahl an Gleitmaterialien, die im Stand der Technik beschrieben sind, besteht nach wie vor ein Bedarf an einem Gleitmaterial, das verschleißfest ist und sowohl für trockenlaufende als auch geschmierte Rotations- und Axialanwendungen geeignet ist.

Es ist Aufgabe der Erfindung, die tribologischen Eigenschaften und insbesondere gleichzeitig die Verschleißfestigkeit von Gleitmaterialien auf PTFE-Polymerbasis bei den verschiedenen Anwendungen zu verbessern.

Diese Aufgabe wird durch ein Gleitmaterial auf PTFE-Polymerbasis mit den Merkmalen des Anspruchs 1 gelöst. Vorteilhafte Weiterbildungen sind in den Ansprüchen 2 bis 8 vorbeschrieben.

Darüber hinaus betrifft die Erfindung einen Gleitlagerverbundwerkstoff nach Anspruch 9 sowie und ein Gleitlagerelement nach Anspruch 10.

Dabei hat sich überraschenderweise herausgestellt, dass der Zusatz von mindestens einem Calciumphosphat zusammen mit wenigstens mehr als 2 Vol.-% Metallsulfid, wobei als Phosphat insbesondere ein Calciumpyrophosphat, eingesetzt wird, als Füllstoffe zur PTFE-Polymerbasis die Verschleißfestigkeit des Gleitmaterials signifikant verbessert. Dies kann bereits ohne Zusatz weiterer Füllstoffe erreicht werden.

Als Calciumphosphat können z.B. Pentacalcium Phosphat, Pentacalcium Hydroxyorthophosphat (Hydroxy Apatite), Tricalcium bis (orthophosphat), Dicalcium pyrophosphat oder Calcium hydrogenorthophosphat verwendet werden.

Besonders vorteilhafte Eigenschaften ergeben sich, wenn der Anteil der Phosphate in Summe 1 - 30 Vol.-%, insbesondere 1 - 25 Vol.-% und insbesondere 1 - 20 Vol.-% des Gleitmaterials beträgt. Besonders bevorzugt sind Mengenanteile zwischen 10 - 15 Vol.-%.

Besonders vorteilhafte Eigenschaften ergeben sich, wenn der Anteil der Phosphate in Summe 1 - 30 Vol.-%, insbesondere 1 - 25 Vol.-% und insbesondere 1 - 20 Vol.-% des Gleitmaterials beträgt. Besonders bevorzugt sind Mengenanteile zwischen 10 - 15 Vol.-%. Dabei beträgt die Anteil wenigstens 1 Vol.-%, vorzugsweise wenigstens 3 Vol.-%, vorzugsweise wenigstens 5 Vol.-%, weiter vorzugsweise wenigstens 10 Vol.-%, weiter vorzugsweise wenigstens 12 Vol.-% und weiter vorzugsweise wenigstens 15 Vol.-%. Weiter vorzugsweise beträgt der Anteil höchstens 30 Vol.-%, weiter bevorzugt höchstens 25 Vol.-%, weiter bevorzugte höchstens 20 Vol.-% und schließlich weiter vorzugsweise höchstens 15 Vol.-%.

Dazu enthält das Gleitmaterial neben dem Phosphat ein oder mehrere Metallsulfide in einem Anteil von mehr als 2 Vol.-%, vorzugsweise mehr als 3 Vol.-% und weiter vorzugsweis mehr als 5 Vol.-%, vorzugsweise mehr als 7 Vol.-% und besonderes bevorzugt mehr als 9 Vol.-% und weiter bevorzugt 10 Vol.-% oder mehr als 10 Vol.-%. Weiter bevorzugt beträgt der Anteil an Metallsulfid höchstens 30 Vol.-%, vorzugsweise höchstens 20 Vol.-% und weiter vorzugsweise höchstens 15 Vol.-%.

Dabei verbessert, neben dem verwendeten Phosphat, das mit einem Anteil von mehr als 2 Vol.-% eingesetzte Metallsulfid die tribologischen Eigenschaften weiter. Als Metallsulfide kommt mindestens eins aus der Gruppe SnS₂, Bi₂S₃, WS₂, ZnS und/oder CuS sowie Kombinationen zum Einsatz.

Das erfindungsgemäße Gleitmaterial ist bevorzugt bleifrei.

Das vorliegende Gleitmaterial eignet sich dabei insbesondere für Verwendungen außerhalb des Motors im Automobilbereich, insbesondere bei Common Rail Pumpen, Stoßdämpfern, Getrieben und Lenksystemen, insbesondere in Rotations- und Axialanwendungen. Bei derartigen Anwendungen besteht der Wunsch, bleifreie Gleitmaterialien einzusetzen. Das vorliegende Gleitmaterial stellt nun ein Material bereit, das eine verbesserte Verschleißfestigkeit aufweist, insbesondere bei gleichgutem oder sogar verbesserten Reibverhalten.

Beim erfindungsgemäßen Gleitmaterial wird eine PTFE-Basis als Polymerbasis für die Polymermatrix verwendet. Dies bedeutet nicht zwingend, dass die gesamte Polymerbasis aus PTFE bestehen muss. Anteile bis zu 30 Vol.-% des Polymeranteils, insbesondere bis 20 Vol.-% und vorzugsweise nur bis 10 Vol.-% der PTFE-Polymerbasis können durch andere Polymere und Kombinationen daraus, wie insbesondere PVDF, PFA, FEP, ECTFE, ETFE ersetzt sein. Vorzugsweise besteht die gesamte PTFE-Polymerbasis zu 100 Vol.-% aus PTFE.

Das Verhältnis der Volumina von Phosphat zu Metallsulfid beträgt vorzugsweise 6:1 bis 1:2, weiter vorzugsweise 4:1 bis 1:1.

Insbesondere können auch ein oder mehrere Phosphate, z.B. Calciumphosphat, mit zwei oder mehreren Metallsulfiden kombiniert werden.

Dabei werden die Volumenanteile mit Hilfe des Gewichts und der Dichte bestimmt.

Das Gleitmaterial umfasst weitere sekundäre Füllstoffe, als weitere Festschmierstoffe, BaSO₄, optional Lithophone und/oder Fluoride, insbesondere Calciumfluorid, und/oder Pigmente sowie Kombinationen der vorgenannten sekundären Füllstoffe. Hierdurch werden die Verschleißeigenschaften weiter verbessert.

Darüber hinaus können weitere tertiäre Füllstoffe, insbesondere Kohlenstofffasern, Glasfasern, Polymerfasern (insbesondere Aramidfasern); und/oder Festschmierstoffe, wie insbesondere Graphit, Ruß, BN und/oder Kunststoffpartikel, wie PFPE, Aramid (PPTA)-, PPSO₂-, PI-und PAI-Partikel, Polyacrylatpartikel (PAR), PBA-Partikel, PBI-Partikel; und/oder Metalloxide, wie insbesondere Fe₂O₃, Al₂O₃, SiO₂, CrO₂, TiO₂, CuO, MgO, ZnO; und/oder Hartstoffpartikel, insbesondere keramische Partikel, wie SiC, Si₃N₄, BC, cubisches BN; und/oder Fluoride, wie insbesondere NaF, AlF₃; und/oder Schichtsilikate, wie insbesondere Kaolin, Glimmer, Wollastonit, Talk, Kieselsäure; und/oder metallische Feinpulver, wie insbesondere Bronze und Wismut; und/oder Pigmente oder Mischphasenoxidpigmente, wie insbesondere Co-Al, Cr-Sb-Ti, Co-Ti, Fe-Al, Mn-Fe oder Co-Cr im Gleitmaterial enthalten sein.

Vorzugsweise beträgt dabei der Anteil der sekundären Füllstoffe 1 - 20 Vol.-% und insbesondere 1 - 10 Vol.-% des Gleitmaterials. Der Anteil der tertiären Füllstoffe im Gleitmaterial kann 0 - 10 Vol.-% des Gleitmaterials betragen.

Weiterhin ist besonders bevorzugt vorgesehen, dass die PTFE-Polymerbasis 50 - 95 Vol.-%, insbesondere 60 - 95 Vol.-% und insbesondere 70 - 90 Vol.-% des Gleitmaterials ausmacht. Auf diese Weise können die Eigenschaften des PTFE Materials das Gleitmaterial in hinreichender Weise beeinflussen.

Das Gleitmaterial kann dabei zur Herstellung eines Gleitlagerverbundwerkstoffs dienen mit einer metallischen Stützschicht, insbesondere aus Stahl oder Bronze, optional mit einer porösen Trägerschicht, insbesondere aus gesinterter Bronze und mit einem die Poren der Trägerschicht oder Stützschicht ausfüllenden Gleitmaterial der vorstehend beschriebenen Art. Das Gleitmaterial mit der PTFE-Basis und den Füllstoffen liegt hierzu vorzugsweise in Pastenform vor. Das pastöse Gleitmaterial wird dann auf die poröse Schicht aufgebracht und über einen Walzvorgang in die Poren einimprägniert und anschließend ausgesintert. Der Gleitlagerverbundwerkstoff kann als Gleitlagerelement eingesetzt werden, wobei ein Gleitlagerelement beispielsweise eine Gleitleiste, ein Gleitschuh, ein Gleitkissen sowie eine Gleitlagerschale, eine Gleitlagerbuchse oder eine Gleitlagerbundbuchse sein kann. Bei Gleitelementen kann es sich darüber hinaus auch um typischerweise gerollte zylindrische Buchsen oder halbschalenförmige Gleitlagerelemente handeln, die mit dem Gleitlagerverbundwerkstoff hergestellt werden. Der Gleitlagerverbundwerkstoff kann auch zur Herstellung von Bundbuchsen oder Topfbuchsen oder ebenen und sphärischen Gleitlagerelementen eingesetzt werden.

Im Folgenden sind verschiedene Beispiele sowie Referenzen aufgelistet.

| Beispiel | Füllstoffe | Polymermatrix |
|---|---|---|
| (Vergleich) 1 | 20 Vol.-% ZnS | PTFE (Rest) |
| (Referenz) 2 | 20 Vol.-% Calciumphosphat | PTFE (Rest) |
| (Vergleich) 3 | 20 Vol.-% Bi₂S₃ | PTFE (Rest |
| (Vergleich) 4 | 20 Vol.-% SnS₂ | PTFE (Rest |
| (Vergleich) 5 | 20 Vol.-% WS₂ | PTFE (Rest |
| 6 | 15 Vol.-% Calciumphosphat | PTFE (Rest) |
| | 10 Vol.-% Bi₂S₃ | |
| 7 | 15 Vol.-% Calciumphosphat | PTFE (Rest) |
| | 10 Vol.-% SnS₂ | |
| 8 | 15 Vol.-% Calciumphosphat | PTFE (Rest) |
| | 10 Vol.-% WS₂ | |
| 9 | 10 Vol.-% Calciumphosphat | PTFE (Rest) |
| | 10 Vol.-% Bi₂S₃ | |
| | 10 Vol.-% BaSO₄ | |

Beim in den Beispielen verwendeten Calciumphosphat handelt es sich in allen Fällen um tri-Calcium-Phosphat Ca₃(PO₄)₂.

In der Zeichnung zeigen:
- Figur 1:: eine schematische Schnittansicht eines erfindungsgemäßen Metall/Kunststoff-Gleitlagerverbundwerkstoffs;
- Figur 2:: Messergebnisse von Verschleißwerten von aus den vorstehenden Gleitmaterialien gefertigten Gleitlagerelementen;
- Figur 3:: Messergebnisse von Reibwerten von aus den vorstehenden Gleitmaterialien gefertigten Gleitlagerelemente.

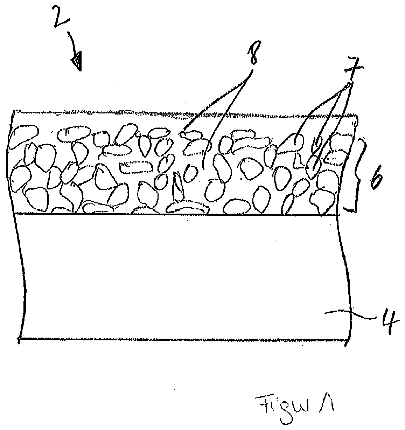

Figur 1 zeigt eine schematische Schnittansicht eines erfindungsgemäßen Gleitlagerverbundwerkstoffs 2 mit einer metallischen Stützschicht 4, typischerweise aus Stahl, und mit einer porösen Trägerschicht 6. Die poröse Trägerschicht 6 ist gebildet von einer Sinterschicht aus metallischen Partikeln 7 auf Bronzebasis. Die Partikel der Trägerschicht 6 bilden dabei zusammenhängende makroskopische Hohlräume (die aber nicht maßstabsgetreu dargestellt sind), in welche ein erfindungsgemäßes Gleitmaterial 8 auf Polymerbasis einimprägniert ist. Das Gleitmaterial 8 füllt dabei die Poren der Trägerschicht 6 im Wesentlichen vollständig aus.

Die matrixbildende Polymerkomponente des Gleitschichtmaterials 8 beruht auf PTFE-Basis im eingangs definierten Sinn. Die Polymerkomponente besteht vorteilhafterweise aus PTFE. Das Gleitschichtmaterial 8 umfasst des Weiteren Füllstoffe, die in der matrixbildenden Polymerkomponente aufgenommen sind, nämlich ein oder mehrere Phosphate sowie ein oder mehrere Metallsulfide.

Weitere Füllstoffe neben Phosphaten und Metallsulfiden können sich als vorteilhaft erweisen und sind ebenfalls nicht dargestellt. Es kommen hier insbesondere die eingangs genannten sekundären und/oder tertiären Füllstoffe in Frage.

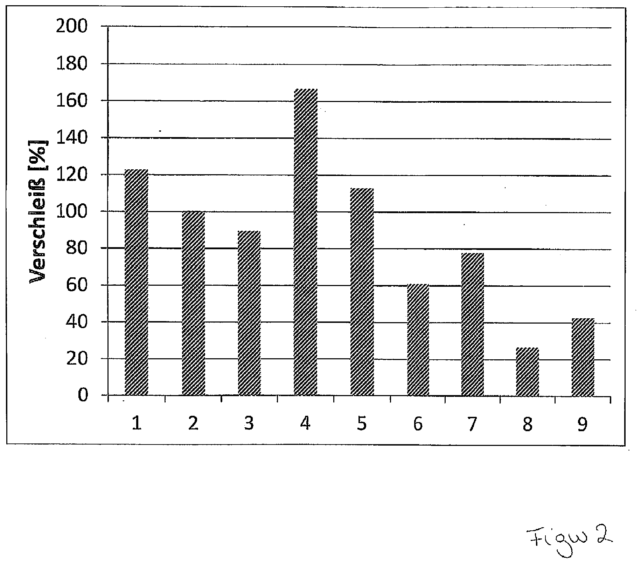

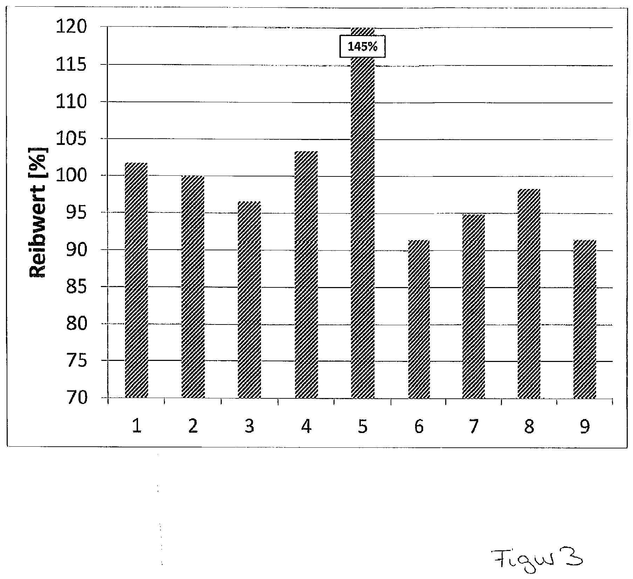

Figur 2 zeigt das Ergebnis von Verschleißmessungen und Figur 3 von Reibwertmessungen an Gleitlagerelementen, die mit Gleitlagerverbundwerkstoffen unter Verwendung von Gleitmaterialien der vorstehenden Beispiele 1 bis 9 gemessen wurden. Die Gleitlagerverbundwerkstoffe umfassen eine metallische Stützschicht aus Stahl, eine poröse Trägerschicht der vorstehend beschriebenen Art und ein die Poren der Trägerschicht ausfüllendes Gleitmaterial auf Polymerbasis. Die untersuchten Gleitlagerelemente unterscheiden sich ausschließlich hinsichtlich der Zusammensetzung des Gleitmaterials.

Die Verschleißfestigkeit und die Reibwerte wurden dabei in einer Rotationsprüfung mit einer Gleitgeschwindigkeit von 2 m/s unter einer Last von 0,75 MPa ermittelt. Die Prüfparameter sind in der nachstehenden Tabelle angegeben.

| Prüfparameter | Prüfparameter |
|---|---|
| Schmierzustand | Trockenlauf |
| Gegenkörper | 100Cr6 |
| Last | 0,75 MPa |
| Gleitgeschwindigkeit | 2 m/s |
| Testdauer | 15 h |

Hierzu wurde eine Buchse als Gleitlagerelement mit einem Innendurchmesser von 20 mm und einem Außendurchmesser von 23 mm sowie 15 mm Breite hergestellt, die das Gleitmaterial gemäß den vorstehenden Beispielen 1 bis 9 aufweist. Beispiel 2, das lediglich Calciumphosphat als Füllstoff enthält, dient dabei als Referenzbeispiel, auf dessen Messwerte die anderen Beispiele bezogen sind. Die Beispiele 1 sowie 3-5, 6-8 sind nicht erfindungsgemäße Vergleichsbeispiele. Das Beispiel 9 zeigt Gleitmaterialien gemäß der Erfindung.

Die Gleitmaterialien, denen als Füllstoff Calciumphosphat und ein Metallsulfid zugegeben wurden und die somit der Erfindung entsprechen, zeigen einen deutlich und überraschend niedrigeren Verschleiß als die Vergleichsbeispiele sowie das Referenzbeispiel.

Durch die gezielten Kombinationen von Calciumphosphat mit Metallsulfiden als weiteren Festschmierstoffen (primären Füllstoffen), wie Bi₂S₃ (Beispiel 6), SnS₂ (Beispiel 7) oder WS₂ (Beispiel 8) kann die Verschleißfestigkeit weiter verbessert werden. Ferner wurden einer Mischung aus Phosphat und primären Füllstoffen (hier Bi₂S₃) und sekundärem Füllstoffe, hier BaSO₄ als Festschmierstoff untersucht, wodurch sich die Verschleißwerte weiter verbessern (s. Beispiel 9). Besonders die Beispiele 8 und 9 zeigen einen um mehr als 50% niedrigeren Verschleiß als die Referenzen bei gleichbleibend guten Reibwerten.

## Patentansprüche

1. Gleitmaterial auf PTFE-Polymerbasis mit die tribologischen Eigenschaften verbessernden Füllstoffen, **dadurch gekennzeichnet, dass** die Füllstoffe Calciumphosphat und mindestens ein Metallsulfid als primärer Füllstoff umfassen und wobei der Anteil der Metallsulfide am Gleitmaterial mindestens > 2 Vol.-% beträgt, wobei sich die Volumenanteile über Gewicht und Dichte bestimmen und das mindestens eine Metallsulfid SnS₂, Bi₂S₃, WS₂, ZnS oder CuS sowie Kombinationen hiervon umfasst und die PTFE-Polymerbasis des Gleitmaterials mindestens 70 Vol.-% PTFE umfasst und wobei das Gleitmaterial den Festschmierstoffe BaSO₄ als sekundären Füllstoffe umfasst.

2. Gleitmaterial nach Anspruch 1, **dadurch gekennzeichnet, dass** die PTFE-Polymerbasis des Gleitmaterials mindestens 80 Vol.-%, insbesondere mindestens 90 Vol.-% und insbesondere 100 Vol.-% PTFE umfasst, und wobei insbesondere Anteile bis zu 30 Vol.-% des Polymeranteils, insbesondere bis 20 Vol.-% und vorzugsweise bis 10 Vol.-% der PTFE-Polymerbasis durch andere Polymere und Kombinationen daraus, wie insbesondere PVDF, PFA, FEP, ECTFE, ETFE ersetzt sind.

3. Gleitmaterial nach Anspruch 1 oder 2, **dadurch gekennzeichnet, dass** der Anteil des Calciumphosphats in Summe 1 - 30 Vol.-%, insbesondere 1 - 25 Vol.-% und insbesondere 1 - 20 Vol.-% des Gleitmaterials beträgt.

4. Gleitmaterial nach einem oder mehreren der vorangehenden Ansprüche, **dadurch gekennzeichnet, dass** der Anteil der Metallsulfide als Füllstoffe in Summe mehr als 3 Vol.-% und weiter vorzugsweise mehr als 5 Vol.-%, vorzugsweise mehr als 7 Vol.-% und besonderes bevorzugt mehr als 9 Vol.-% und weiter bevorzugt 10 Vol.-% oder mehr als 10 Vol.-% sowie weiter bevorzugt höchstens 30 Vol.-%, vorzugsweise höchstens 20 Vol.-% und weiter vorzugsweise höchstens 15 Vol.-% des Gleitmaterials beträgt.

5. Gleitmaterial nach einem oder mehreren der vorangehenden Ansprüche, **dadurch gekennzeichnet, dass** Verhältnis der Volumina Calciumphosphats zu dem einen oder den mehreren Metallsulfiden 6:1 bis 1:2, vorzugsweise 4:1 bis 1:1 beträgt.

6. Gleitmaterial nach einem oder mehreren der vorangehenden Ansprüche, **dadurch gekennzeichnet, dass** es weitere sekundäre Füllstoffe umfasst, insbesondere weitere Festschmierstoffe, insbesondere Lithophone und/oder Fluoride, insbesondere Calciumfluorid, und/oder Pigmente sowie Kombinationen der vorgenannten sekundären Füllstoffe.

7. Gleitmaterial nach einem oder mehreren der vorangehenden Ansprüche, **dadurch gekennzeichnet, dass** weitere tertiäre Füllstoffe, insbesondere Kohlenstofffasern, Glasfasern, Polymerfasern (insbesondere Aramidfasern); und/oder Festschmierstoffe, wie insbesondere Graphit, Ruß, BN und/oder Kunststoffpartikel, wie PFPE, Aramid (PPTA)-, PPSO₂-, PI- und PAI-Partikel, Polyacrylatpartikel (PAR), PBA-Partikel, PBI-Partikel; und/oder Metalloxide, wie insbesondere Fe₂O₃, Al₂O₃, SiO₂, CrO₂, TiO₂, CuO, MgO, ZnO; und/oder Hartstoffpartikel, insbesondere keramische Partikel, wie SiC, Si₃N₄, BC, cubisches BN; und/oder Fluoride, wie insbesondere NaF, AlF₃; und/oder Schichtsilikate, wie insbesondere Kaolin, Glimmer, Wollastonit, Talk, Kieselsäure; und/oder metallische Feinpulver, wie insbesondere Bronze und Wismut; und/oder Pigmente oder Mischphasenoxidpigmente, wie insbesondere Co-Al, Cr-Sb-Ti, Co-Ti, Fe-Al, Mn-Fe oder Co-Cr enthalten sind.

8. Gleitmaterial nach einem oder mehreren der vorangehenden Ansprüche, **dadurch gekennzeichnet, dass** die PTFE-Polymerbasis 50 - 95 Vol.-%, insbesondere 60 - 95 Vol.-% und insbesondere 70 - 90 Vol.-% des Gleitmaterials ausmacht.

9. Gleitlagerverbundwerkstoff mit einer metallischen Stützschicht, insbesondere aus Stahl oder Bronze, mit einer porösen Trägerschicht, insbesondere aus Bronze, und mit einem die Poren der Trägerschicht ausfüllenden Gleitmaterial nach einem oder mehreren der vorstehenden Ansprüche 1 bis 8.

10. Gleitlagerelement hergestellt aus einem Gleitlagerverbundwerkstoff nach Anspruch 9.

11. Gleitlagerelement nach Anspruch 10, **dadurch gekennzeichnet, dass** es eine Gleitleiste, ein Gleitschuh oder Gleitkissen oder ein Gleitlagerschale, eine Gleitlagerbuchse oder -bundbuchse ist.

## Claims

1. PTFE polymer-based sliding material with fillers improving the tribological properties, **characterised in that** the fillers comprise calcium phosphate and at least one metal sulphide as primary filler and wherein the metal sulphide content of the sliding material is at least > 2 vol%, wherein the contents by volume are determined by weight and density and the at least one metal sulphide comprises SnS₂, Bi₂S₃, WS₂, ZnS or CuS as well as combinations thereof and the PTFE polymer base of the sliding material comprises at least 70 vol% PTFE and wherein the sliding material contains the solid lubricants BaS0₄ as secondary fillers.

2. Sliding material according to claim 1, **characterised in that** the PTFE polymer base of the sliding material comprises at least 80 vol%, in particular at least 90 vol% and in particular 100 vol% PTFE, and wherein in particular contents of up to 30 vol% of the polymer content, in particular up to 20 vol% and preferably up to 10 vol% of the PTFE polymer base is replaced by other polymers and combinations thereof, such as in particular PVDF, PFA, FEP, ECTFE, ETFE.

3. Sliding material according to claim 1 or 2, **characterised in that** the content of the calcium phosphate amounts in total to 1 - 30 vol%, in particular 1 - 25 vol% and in particular 1 - 20 vol% of the sliding material.

4. Sliding material according to one or more of the preceding claims, **characterised in that** the content of the metal sulphide as fillers amount in total to more than 3 vol% and more preferably more than 5 vol%, preferably more than 7 vol% and particularly preferably more than 9 vol% and more preferably 10 vol% or more than 10 vol%, and more preferably at most 30 vol%, preferably at most 20 vol% and more preferably at most 15 vol% of the sliding material.

5. Sliding material according to one or more of the preceding claims, **characterised in that** ratio of the volume of calcium phosphate to the one or more metal sulphides is 6:1 to 1:2, preferably 4:1 to 1:1.

6. Sliding material according to one or more of the preceding claims, **characterised in that** it further comprises secondary fillers, in particular further solid lubricants, in particular lithophones and/or fluorides, in particular calcium fluoride, and/or pigments as well as combinations of the aforementioned secondary fillers.

7. Sliding material according to one or more of the preceding claims, **characterised in that** it contains further tertiary fillers, in particular carbon fibres, glass fibres, polymer fibres (in particular aramid fibres); and/or solid lubricants, in particular graphite, soot, BN and/or plastic particles, such as PFPE, aramid (PPTA), PPSO₂, PI and PAI particles, polyacrylate particles (PAR), PBA particles, PBI particles; and/or metal oxides, in particular Fe₂O₃, Al₂O₃, SiO₂, CrO₂, TiO₂, CuO, MgO, ZnO; and/or hard material particles, in particular ceramic particles such as SiC, Si₃N₄, BC, cubic BN; and/or fluorides, in particular NaF, AlF₃; and/or layered silicates, in particular kaolin, mica, wollastonite, talc, silica; and/or metallic fine powders, in particular bronze and bismuth; and/or pigments or mixed phase oxide pigments, in particular Co-Al, Cr-Sb-Ti, Co-Ti, Fe-Al, Mn-Fe or Co-Cr.

8. Sliding material according to one or more of the preceding claims, **characterised in that** the PTFE polymer base makes up 50 - 95 vol%, in particular 60 - 95 vol% and in particular 70 - 90 vol% of the sliding material.

9. Plain bearing composite material with a metallic support layer, in particular of steel or bronze, with a porous backing layer, in particular of bronze, and with a sliding material according to one or more of the preceding claims 1 to 8 filling the pores of the backing layer.

10. Plain bearing element manufactured from a plain bearing composite material according to claim 9.

11. Plain bearing element according to claim 10, **characterised in that** it is a sliding rail, a sliding shoe or sliding pad or a plain bearing shell or plain bearing bushing or plain bearing collar bushing.

## Revendications

1. Matériau antifriction à base de polymère PTFE avec des charges améliorant les propriétés tribologiques, **caractérisé en ce que** les charges comprennent du phosphate de calcium et au moins un sulfure métallique en tant que charge primaire et dans lequel la proportion des sulfures métalliques dans le matériau antifriction est au moins > 2 % en volume, dans lequel les proportions en volume sont déterminées grâce au poids et à la densité et le au moins un sulfure métallique comprend SnS₂, Bi₂S₃, WS₂, ZnS ou CuS et des combinaisons de ceux-ci et la base de polymère PTFE du matériau antifriction comprend au moins 70 % en volume de PTFE et dans lequel le matériau antifriction comprend des lubrifiants solides BaSO₄ en tant que charges secondaires.

2. Matériau antifriction selon la revendication 1, **caractérisé en ce que** la base de polymère PTFE du matériau antifriction comprend au moins 80 % en volume, en particulier au moins 90 % en volume, en particulier 100 % en volume, de PTFE, et dans lequel en particulier des proportions allant jusqu'à 30 % en volume de la fraction polymère, en particulier jusqu'à 20 % en volume, et de manière préférée jusqu'à 10 % en volume de la base de polymère PTFE, sont remplacées par d'autres polymères et des combinaisons de ceux-ci, en particulier du PVDF, PFA, FEP, ECTFE et ETFE.

3. Matériau antifriction selon la revendication 1 ou 2, **caractérisé en ce que** la proportion totale de phosphate de calcium est comprise entre 1 et 30 % en volume, en particulier comprise entre 1 et 25 % en volume, en particulier comprise entre 1 et 20 % en volume, du matériau antifriction.

4. Matériau antifriction selon l'une quelconque ou plusieurs des revendications précédentes, **caractérisé en ce que** la proportion totale des sulfures métalliques en tant que charges est supérieure à 3 % en volume et de manière préférée supérieure à 5 % en volume, de manière plus préférée supérieure à 7 % en volume et de manière particulièrement préférée supérieure à 9 % en volume et de manière plus particulièrement préférée de 10 % en volume ou supérieure à 10 % en volume et de manière préférée inférieure ou égale à 30 % en volume, de manière plus préférée inférieure ou égale à 20 % en volume et de manière particulièrement préférée inférieure ou égale à 15 % en volume du matériau antifriction.

5. Matériau antifriction selon l'une quelconque ou plusieurs des revendications précédentes, **caractérisé en ce que** le rapport du volume de phosphate de calcium sur le(s) volume(s) du ou des sulfures métalliques est compris entre 6:1 et 1:2, de manière préférée compris entre 4:1 et 1:1.

6. Matériau antifriction selon l'une quelconque ou plusieurs des revendications précédentes, **caractérisé en ce qu'**il comprend d'autres charges secondaires, en particulier d'autres lubrifiants solides, en particulier du lithopone et/ou des fluorures, en particulier du fluorure de calcium, et/ou des pigments, et des combinaisons desdites charges secondaires.

7. Matériau antifriction selon l'une quelconque ou plusieurs des revendications précédentes, **caractérisé en ce qu'**il contient d'autres charges tertiaires, en particulier des fibres de carbone, des fibres de verre, des fibres polymères (en particulier des fibres d'aramide) ; et/ou des lubrifiants solides tels que, en particulier, du graphite, du noir de carbone, du BN et/ou des particules de plastique telles que des particules de PFPE, d'aramide (PPTA), de PPSO₂, de PI et de PAI, des particules de polyacrylate (PAR), des particules de PBA, des particules de PBI ; et/ou des oxydes métalliques, tels que en particulier Fe2O₃, Al₂O₃, SiO₂, CrO₂, TiO₂, CuO, MgO, ZnO ; et/ou des particules de matériau dur, en particulier des particules de céramique telles que SiC, Si₃N₄, BC, BN cubique ; et/ou des fluorures, tels que en particulier NaF, AlF₃; et/ou des phyllosilicates, tels que en particulier le kaolin, le mica, la wollastonite, le talc, la silice ; et/ou des poudres fines métalliques, telles que en particulier le bronze et le bismuth ; et/ou des pigments ou pigments d'oxydes en phase mixte, tels que en particulier Co-Al, Cr-Sb-Ti, Co-Ti, Fe-Al, Mn-Fe ou Co-Cr.

8. Matériau antifriction selon l'une quelconque ou plusieurs des revendications précédentes, **caractérisé en ce que** la base de polymère PTFE représente entre 50 et 95 % en poids, en particulier entre 60 et 95 % en poids et en particulier entre 70 et 90 % en poids du matériau antifriction.

9. Matériau composite pour palier antifriction, comprenant une couche métallique de support, en particulier en acier ou en bronze, avec un substrat poreux, en particulier en bronze, et avec un matériau antifriction selon l'une quelconque ou plusieurs des revendications 1 à 8 précédentes remplissant les pores du sustrat.

10. Elément de palier antifriction réalisé en un matériau composite pour palier antifriction selon la revendication 9.

11. Elément de palier antifriction selon la revendication 10, **caractérisé en ce qu'**il s'agit d'une bande antifriction, d'un patin antifriction ou d'un coussin antifriction ou d'un coussinet de palier antifriction, d'une bague de palier antifriction ou d'une douille à collet de palier antifriction.
